**Europäisches Patentamt**

**European Patent Office**

**Office européen des brevets**

(11) Veröffentlichungsnummer: **0 128 856**
**A1**

## EUROPÄISCHE PATENTANMELDUNG

(21) Anmeldenummer: **84730059.7**

(22) Anmeldetag: **30.05.84**

(51) Int. Cl.³: **B 65 G 51/24,** B 65 G 51/40, B 65 G 51/34

(30) Priorität: **10.06.83 DE 3321495**

(43) Veröffentlichungstag der Anmeldung: **19.12.84** **Patentblatt 84/51**

(84) Benannte Vertragsstaaten: **AT CH DE IT LI SE**

(71) Anmelder: **Siemens Aktiengesellschaft, Berlin und München Wittelsbacherplatz 2, D-8000 München 2 (DE)**

(72) Erfinder: **Dziggel, Klaus-Peter, Dipl.-Ing., Küsterstrasse 18, D-1000 Berlin 20 (DE)** Erfinder: **Hoffmann, Hartmut, Dipl.-Ing., Chamisso Strasse 6, D-1000 Berlin 20 (DE)** Erfinder: **Prenninger, Walter, Brambillagasse 4/4, A-1110 Wien (AT)**

(54) **Rohrpostanlage mit einer zentralen Mehrfachweiche und mit einer Wendebetriebsanlage.**

(57) Ein Empfangsstrang (13) ist an eine Einschleusöffnung (12a) und ein Sendestrang (14) an eine Ausschleusöffnung (12b) einer Übergaberohrpoststation (12) angeschlossen; die Übergaberohrpoststation (12) ist mit zwei fluchtenden Anschlussstutzen in eine Einrohr-Wendebetriebsrohrpostanlage eingefügt. Eine der Übergaberohrpoststation (12) zugeordnete Stationssteuereinrichtung ist ebenso wie die die Verbindung der Empfangsstränge und der Sendestränge bewirkende zentrale Mehrfachweiche (1) steuernde zentrale Steuereinrichtung (9) an eine Übergabesteuereinrichtung (15) angeschlossen.

Die erfindungsgemässe Rohrpostanlage stellt eine steuerungstechnisch günstige Kombination einer zentral gesteuerten Anlage mit einer Einrohr-Wendebetriebsrohrpostanlage dar.

Rohrpostanlage mit einer zentralen Mehrfachweiche und mit einer Wendebetriebsanlage

Die Erfindung betrifft eine Rohrpostanlage mit den Merkmalen des Oberbegriffs des Anspruchs 1.

Die Steuerung einer derartigen Rohrpostanlage erfolgt üblicherweise mittels einer sogenannten Büchsensteuerung, d.h. daß die Rohrpostbüchsen verstellbare Zielkennzeichen tragen, deren eingestellter Codewert mittels Abtasteinrichtungen erkannt und in entsprechende Stellbefehle für die zentrale Mehrfachweiche umgesetzt wird. Die Abtasteinrichtungen befinden sich dabei unmittelbar an der Eingangsebene der zentralen Mehrfachweiche und sind ausgangsseitig mit der zentralen Steuereinrichtung verbunden, die sowohl die zentrale Mehrfachweiche als auch die Empfängeranschlüsse steuert. Es ist auch bekannt, derartige zentral gesteuerte Rohrpostanlagen mit neutralen Rohrpostbüchsen, d.h. Büchsen ohne verstellbare Zielkennzeichen zu betreiben; die den einzelnen Rohrpostbüchsen zuzuordnende Zielinformation wird über eine Wählscheibe oder Wähltastatur eingegeben und der zentralen Steuereinrichtung übermittelt, die eine der Reihenfolge der in einzelnen Sendesträngen an der zentralen Mehrfachweichen ankommenden Rohrpostbüchsen entsprechende Reihenfolge der Zielinformationen einhält.

In derartigen Rohrpostanlagen mit zentraler Mehrfachweiche durchfahren alle für einen bestimmten Empfängeranschluß bestimmten Rohrpostbüchsen vom Aufgabeort (Senderanschluß) an einen der Sendestränge und werden durch

Om 3 Win / 09.06.1983 die zentrale Mehrfachweiche in den den angewählten Empfängeranschluß aufweisenden Empfangsstrang überführt. Mit dieser Anlagenkonfiguration ist eine sehr hohe Verkehrsleistung der ganzen Anlage möglich; diese Anlagenkonfiguration erzwingt aber für jeden Transportvorgang die Fahrt der Rohrpostbüchse im Sendestrang zur zentralen Mehrfachweiche und von dieser in einem Empfangsstrang zum angewählten Empfängeranschluß. Dies ist insbesondere dann als störend anzusehen, wenn bestimmte Stationen (Senderanschluß und Empfängeranschluß) mit anderen räumlich benachbarten Stationen häufig Sendungen austauschen. Dies gilt beispielsweise für Stationen, die organisatorisch eng verflochtenen Betriebseinheiten zugeordnet sind. Für solche Stationen wäre an sich eine Verbindung mittels einer Einrohr-Wendebetriebsanlage oder einem vermaschten Netz solcher Einrohr-Wendebetriebsanlagen vorteilhafter.

Die der Erfindung zugrunde liegende Aufgabe besteht darin, den Vorteil einer Einrohr-Wendebetriebsanlage für solche häufig miteinander verkehrenden Stationen zu ermöglichen, ohne Nachteile für die Verkehrsabläufe in Kauf zu nehmen, in denen eine der Stationen mit anderen - insbesondere weiter entfernten - Rohrpoststationen Transportvorgänge durchführt. Dies wird erfindungsgemäß durch die Merkmale des Kennzeichens des Patentanspruchs 1 erreicht.

Der wesentliche Vorteil der erfindungsgemäßen Rohrpostanlage besteht in einer Verknüpfung einer zentral gesteuerten Rohrpostanlage mit einer Einrohr-Wendebetriebsanlage über eine Übergabe-Rohrpoststation, ohne daß eine zu Änderungen in den anlagenspezifischen Steuerungen führende steuerungstechnische Verknüpfung beider Anlagentypen notwendig ist. Vielmehr können die Steuerungen beider Anlagentypen im Prinzip unverändert aufrechthalten werden, sogar in unterschiedlichen Technologien aufgebaut sein, da die notwendige Zusammenarbeit und Abstimmung der beiden Steuerungen lediglich mittels der Übergabesteuereinrichtung erfolgt, die ohne Schwierigkeiten auf die unterschiedlichen Arbeitsweisen der Steuerungen der beiden Anlagentypen abgestimmt werden kann.

Aus der DE-AS 1 919 537 ist eine Rohrpostanlage mit zentraler Mehrfachweiche bekannt, bei der eine kombinierte Sende- und Empfangsstation in einen Fahrrohrstrang eingefügt ist, der in einem der zentralen Mehrfachweiche nahe gelegenen Bereich über einen Einlaufbogen in einen Sendestrang und einen Empfangsstrang verzweigt wird. Bei Einsatz weiterer kombinierter Sende- und Empfangsstationen im Zuge des gleichen Fahrrohres läge eine Erweiterung zu einer Einrohr-Wendebetriebsanlage vor, die auf diese Weise ebenfalls in eine Anlage mit über eine zentrale Mehrfachweiche verbindbaren getrennten Sende- und Empfangssträngen integriert wäre. Eine derartige kombinierte Anlage erforderte einen weitgehenden Eingriff in die die Gesamtanlage steuernde zentrale Steuereinrichtung, was insbesondere bei späterem Hinzufügen einer Einrohr-Wendebetriebsanlage mit anderer interner Steuertechnologie zu erheblichen Anpassungsänderungen und Zusatzeinrichtungen in der zentralen Steuereinrichtung führen würde.

Sofern die Rohrpoststationen der Wendebetriebsrohrpostanlage neben zwei fluchtenden Anschlüssen für die Durchgangsstellung eines Verbindungsrohres nur einen einzigen weiteren Rohrstutzen, in dessen Flucht das Durchgangsrohr oder ein Speicherrohr einfahrbar ist, aufweisen, wird vorzugsweise auf den Einsatz einer anderen Rohrpostbauform als Übergaberohrpoststation verzichtet, sondern statt dessen eine Übergaberohrpoststation in den Empfangsstrang und eine weitere Übergaberohrpoststation in den Sendestrang eingefügt.

Weisen dagegen die Rohrpoststationen der Wendebetriebsrohrpostanlage einen weiteren Anschlußstutzen auf, so
kann der Übergabeverkehr über eine einzige Übergaberohrpoststation durchgeführt werden. Das heißt, daß dann
die Einschleusöffnung und die Ausschleusöffnungen Öffnungen derselben Übergaberohrpoststation darstellen.

Sofern die Wendebetriebsrohrpostanlage mehrere Einrohr-
Unteranlagen enthält, die über Verbindungssätze - ebenfalls aus gleichartigen Rohrpoststationen gebildet -
verbunden sind, kann je nach der Größe des Übergabeverkehrs ein einziger Empfangsstrang bzw. ein einziger
Sendestrang für den Übergabeverkehr vorgesehen sein
oder es wird eine entsprechend größere Anzahl von Übergaberohrpoststationen eingesetzt. Dabei kann auch bei
Einsatz einer Übergaberohrpoststation mit zwei an sich
als Einschleusöffnung bzw. Ausschleusöffnung heranziehbaren Rohrstutzen eine Übergaberohrpoststation jeweils
nur dem Empfangsstrang oder nur dem Sendestrang zugeordnet werden, um die Kapazität des Übergabeverkehrs
zu erhöhen.

Sofern in den Stationen der Wendebetriebsrohrpostanlage
eine pneumatische Bremsung ankommender Rohrpostbüchsen
vorgesehen ist, kann eine pneumatische Bremsung von
aus der zentralen Mehrfachweiche in die Übergaberohrpoststation eintretenden Rohrpostbüchsen dadurch erzielt
werden, daß der Einschleusöffnung der Übergaberohrpoststation ein wahlweise in den lichten Querschnitt des
Empfangsstranges einfahrbarer bzw. aus diesem ausfahrbarer Schieber vorgelagert ist. Dieser Schieber wird
bevorzugt direkt von der Übergabesteuereinrichtung beeinflußt.

Eine vorteilhafte Weiterbildung der Erfindung bezweckt
die zeitliche Unabhängigkeit der Übergabe von Informationen zwischen der Übergabesteuereinrichtung und der Stationssteuereinrichtung der Übergaberohrpoststation und sieht in diesem Zusammenhang vor, daß die Übergabesteuereinrichtung Register zur Aufnahme von Zielinformationen von aus der zentralen Mehrfachweiche in die Wendebetriebsrohrpostanlage zu überführenden Rohrpostbüchsen aufweist. Die Zielinformationen können damit jeweils in dem für die Arbeitsweise der zentralen Steuereinrichtung bzw. der der Übergaberohrpoststation zugeordneten Stationssteuerung günstigen Zeitpunkt übernommen werden. Vorhandene Unterschiede in der Codierung der Zielinformationen der Wendebetriebsrohrpostanlage und der Anlage mit zentraler Mehrfachweiche werden für den eigentlichen Übergabeverkehr bevorzugt derart aneinander angepaßt, daß die Übergabesteuereinrichtung Codeumsetzeinrichtungen für die Zielinformationen aufweist.

Während die Zielinformationen für den von der zentralen Mehrfachweiche auf die Wendebetriebsrohrpostanlage gerichteten Übergabeverkehr zweckmäßigerweise derart erfolgen, daß die Übergabesteuereinrichtung die entsprechenden Zielinformationen in die Stationssteuerung der Übergaberohrpoststation einschreibt, von wo sie in gleicher Weise wie die üblicher Weise mit einer Wähltastatur eingegebenen Zielinformationen von einer Anlagensteuereinrichtung der Wendebetriebsrohrpostanlage übernommen werden, kann die Übergabe der Zielinformationen für den von der Übergaberohrpoststation auf die zentrale Mehrfachweiche gerichteten Übergabeverkehr derart erfolgen, daß in der der Übergaberohrpoststation zugeordneten Stationssteuereinrichtung die Codebezeichnungen aller Empfängeranschlüsse gespeichert sind und bei Anliegen einer Zielinformation an einem über alle Rohrpoststationen geführten Datenbus mit der Zielinformation verglichen sowie bei Koinzidenz an die Übergabesteuereinrichtung übertragen werden. Dies würde es möglich machen, in der Wendebetriebsanlage neutrale Rohrpostbüchsen ohne Zielkennzeichen zu verwenden. Die Rücksendung solcher neutraler Büchsen in die Wendebetriebsanlage könnte durch entsprechende Einstellung der zentralen Steuereinrichtung derart geschehen, daß bei jeder Fehlabstastung - kein Zielkennzeichen abtastbar - eine Überführung zur Übergaberohrpoststation und von dieser zu einer vorbestimmten Rohrpoststation der Wendebetriebsanlage vorgenommen würde. Bei generellem Einsatz von Rohrpostbüchsen mit verstellbaren Zielkennzeichen ist jedoch der Einsatz einer Abtasteinrichtung an dem an die Übergaberohrpoststation angeschlossenen Sendestrang vorzuziehen.

Die Erfindung wird im folgenden anhand eines schematisch dargestellten Ausführungsbeispiels erläutert.

In eine zentrale Mehrfachweiche 1 münden drei Sendestränge 2, 3, 4 und drei Empfangsstränge 5, 6, 7. In die Sendestränge 2, 3, 4 münden jeweils Senderanschlüsse, von denen nur einer - 2a - im Sendestrang 2 dargestellt ist. Ebenso sind in den Empfangssträngen 5, 6, 7 Empfängeranschlüsse vorgesehen, von denen nur einer - 5a - dargestellt ist. Die Steuerung von Rohrpostbüchsen erfolgt mittels einer sogenannten Büchsensteuerung, d.h. daß die in der Anlage verkehrenden Rohrpostbüchsen manuell verstellbare Zielkennzeichen aufweisen, deren jeweiliger Codewert mittels Abtasteinrichtungen 2b, 3b, 4b abgetastet und an eine zentrale Steuereinrichtung 9 übertragen wird, die darüber hinaus mit sämtlichen Senderanschlüssen 2a und Empfängeranschlüssen 5a verbunden ist.

Mehrere weitere Rohrpoststationen, von denen nur eine - 10 - dargestellt ist, sind mittels eines Fahrrohres 11 zu einer Wendebetriebsrohrpostanlage zusammengefügt.

0128856

In diese Wendebetriebesrohrpostanlage ist eine Übergaberohrpoststation 12 gleichen Typs wie die Rohrpoststation 10 der Wendebetriebsrohrpostanlage eingefügt, die der Abwicklung des Übergabeverkehrs von der Wendebetriebsrohrpostanlage in die zentrale Mehrfachweiche 1 bzw. in umgekehrter Richtung dient. Das Fahrrohr 11 ist dabei an fluchtende Anschlußstutzen der Übergaberohrpoststation 12 angeschlossen, während ein weiterer an die zentrale Mehrfachweiche 1 angeschlossener Empfangsstrang 13 an eine Einschleusöffnung 12a und ein weiterer an die zentrale Mehrfachweiche 1 angeschlossener Sendestrang 14 an eine Ausschleusöffnung 12b der Übergaberohrpoststation 12 angeschlossen ist. In den Empfangsstrang 13 ist ein elektromotorisch antreibbarer Schieber 15 eingefügt, der aus der zentralen Mehrfachweiche 1 ankommende Rohrpostbüchsen pneumatisch abbremst. Durch gestrichelte Darstellung einer weiteren Abtasteinrichtung 14b im Sendestrang 14 wird die Möglichkeit veranschaulicht, die einem angewählten Empfängeranschluß zugeordnete Zielinformation an den Rohrpostbüchsen einzustellen und im Bereich der zentralen Mehrfachweiche 1 abzutasten. Ebenso ist es möglich, die entsprechende Zielinformation in üblicher Weise durch Wählschalter 10b an einer der Rohrpoststationen 10 der Wendebetriebsrohrpostanlage einzustellen und über die Stationssteuerung der Übergaberohrpoststation 12 an eine Übergabesteuereinrichtung 16 abzugeben, die den Austausch sämtlicher Steuerinformationen zwischen der zentralen Steuereinrichtung 9 und einer Stationssteuereinrichtung der Übergaberohrpoststation 12 durchführt. Die Stationssteuerung der Übergaberohrpoststation 12 steht darüber hinaus unter dem Steuereinfluß einer weiteren, die Verkehrsabläufe innerhalb der Wendebetriebsrohrpostanlage steuernden Steuereinrichtung 17.

6 Patentansprüche
1 Figur

0128856

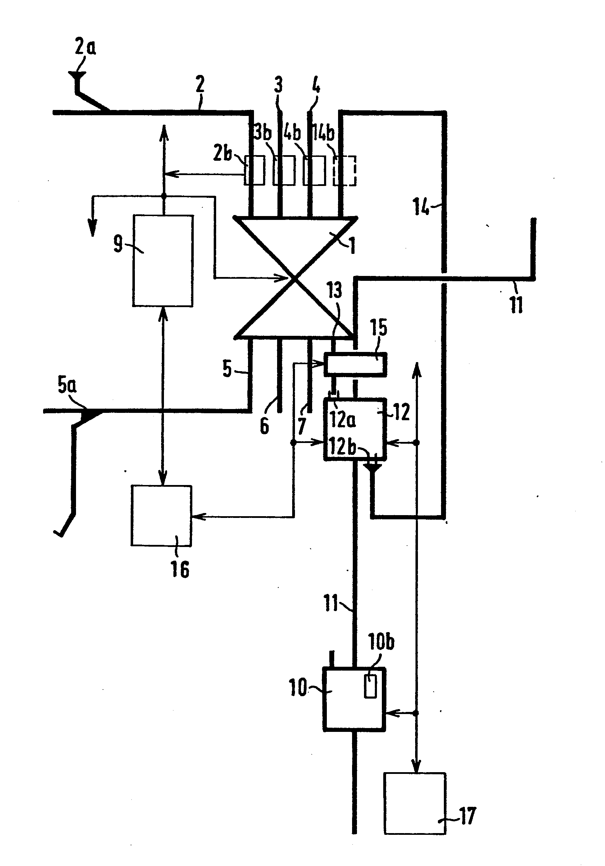

Patentansprüche

1. Rohrpostanlage mit an Eingänge einer zentralen Mehrfachweiche angeschlossenen, wenigstens einen Senderanschluß aufweisenden Sendesträngen und mit an Ausgänge
der zentralen Mehrfachweiche angeschlossenen, wenigstens
einen Empfängeranschluß aufweisenden Empfangssträngen
sowie mit einer der zentralen Mehrfachweiche zugeordneten
zentralen Steuereinrichtung, die mit den Senderanschlüssen und mit den Empfängeranschlüssen zugeordneten peripheren
Stelleinrichtungen verbunden ist,
d a d u r c h   g e k e n n z e i c h n e t ,
daß wenigstens ein Empfangsstrang (13) an eine Einschleusöffnung (12a) und wenigstens ein Sendestrang (14) an
eine Ausschleusöffnung (12b) einer Übergaberohrpoststation (12) angeschlossen ist, die mit zwei fluchtenden Anschlußstutzen in eine weitere Rohrpoststationen
(10) aufweisende Wendebetriebsrohrpostanlage eingefügt
ist, und daß eine der Übergaberohrpoststation (12) zugeordnete Stationssteuereinrichtung ebenso wie die zentrale
Steuereinrichtung (9) mittels Steuerleitungen, über die
aus der Wendebetriebsrohrpostanlage in die zentrale
Mehrfachweiche (1) bzw. aus dieser in die Wendebetriebsrohrpostanlage zu überführenden Rohrpostbüchsen zugeordnete Zielinformationen übertragbar sind, mit einer
Übergabesteuereinrichtung (15) verbunden ist.

2. Rohrpostanlage nach Anspruch 1, d a d u r c h   g e -
k e n n z e i c h n e t , daß die Einschleusöffnung
(12a) und die Ausschleusöffnung (12b) Öffnungen derselben Übergaberohrpoststation (12) darstellen.

3. Rohrpostanlage nach Anspruch 1 oder 2, d a d u r c h
g e k e n n z e i c h n e t , daß der Einschleusöffnung
(12a) der Übergaberohrpoststation (12) ein wahlweise
in den lichten Querschnitt des Empfangsstranges (13) einfahrbarer bzw. aus diesem ausfahrbarer Schieber (15) vorgelagert ist.

4. Rohrpostanlage nach einem der Ansprüche 1 bis 3, d a d u r c h   g e k e n n z e i c h n e t , daß die Übergabesteuereinrichtung (15) Register zur Aufnahme von Zielinformationen von aus der zentralen Mehrfachweiche (1) in die Wendebetriebsrohrpostanlage zu überführenden Rohrpostbüchsen aufweist.

5. Rohrpostanlage nach einem der Ansprüche 1 bis 4, d a d u r c h   g e k e n n z e i c h n e t, daß die Übergabesteuereinrichtung (15) Codeumsetzeinrichtungen für die Zielinformationen aufweist.

6. Rohrpostanlage nach einem der Ansprüche 1 bis 5, d a d u r c h   g e k e n n z e c h n e t , daß in der der Übergaberohrpoststation (12) zugeordneten Stationssteuereinrichtung die Codebezeichnungen aller Empfängeranschlüsse gespeichert sind und bei Anliegen einer Zielinformation an einem über alle Rohrpoststationen (10,12) geführten Datenbus mit der Zielinformation verglichen sowie bei Koinzidenz an die Übergabesteuereinrichtung (15) übertragen werden.

Europäisches
Patentamt

**EUROPÄISCHER RECHERCHENBERICHT**

0128856
Nummer der Anmeldung

EP  84 73 0059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 197 798  (SAUNIER-DUVAL) <br> * Seite 1, Zeilen 8-12; Seite 2, Zeilen 8-12 * | 1 | B 65 G  51/24 <br> B 65 G  51/40 <br> B 65 G  51/34 |
| | --- | | |
| A | FR-A-2 071 026  (SAUNIER-DUVAL) <br> * Seite 1, Zeilen 31-34 * | 1 | |
| | --- | | |
| A | SEL NACHRICHTEN, Band 12, Nr. 3, 1964, Seiten 164-172; K. NEUMEIER et al.: "Nummernschaltergesteuertes Rohrpostsystem" <br> * Seite 164, Spalte 2, Zeilen 21-25 * | 1 | |
| | ----- | | |

|  |  |
|---|---|
| | **RECHERCHIERTE SACHGEBIETE (Int. Cl. ³)** <br><br> B 65 G |

Der vorliegende Recherchenbericht wurde für alle Patentansprüche erstellt.

| Recherchenort <br> DEN HAAG | Abschlußdatum der Recherche <br> 04-09-1984 | Prüfer <br> OSTYN T.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82